(19) Europäisches Patentamt
European Patent Office
Office européen des brevets

(11) **EP 4 586 002 A1**

(12) **EUROPEAN PATENT APPLICATION**

(43) Date of publication:
**16.07.2025 Bulletin 2025/29**

(21) Application number: **25150953.5**

(22) Date of filing: **09.01.2025**

(51) International Patent Classification (IPC):
*G02F 1/1339* *(2006.01)*

(52) Cooperative Patent Classification (CPC):
G02F 1/13394

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.01.2024 KR 20240004013**

(71) Applicant: **Dongwoo Fine-Chem Co., Ltd.**
**Iksan-si, Jeollabuk-do 54631 (KR)**

(72) Inventors:
• **KIM, Sung-Min**
**54631 Jeollabuk-do (KR)**
• **KIM, Dong-Hwi**
**54631 Jeollabuk-do (KR)**

(74) Representative: **Betten & Resch**
**Patent- und Rechtsanwälte PartGmbB**
**Maximiliansplatz 14**
**80333 München (DE)**

(54) **OPTICAL LAMINATE, METHOD FOR MANUFACTURING THE SAME, SMART WINDOW INCLUDING THE SAME, AND AUTOMOBILE AND WINDOW FOR BUILDING USING THE SAME**

(57)     Disclosed is a transmittance variable optical laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer and including ball spacers, wherein at least one of the first polarizing plate and the second polarizing plate includes a functional layer having a plurality of pattern portions satisfying Equation 1, and the ball spacers are incorporated into the pattern portions. Also disclosed are a method for manufacturing the optical laminate, a smart window including the optical laminate, and an automobile or a window for a building using the same.

**FIG. 1**

EP 4 586 002 A1

## Description

## BACKGROUND

1. Technical Field

The present disclosure relates to a transmittance variable optical laminate, a method for manufacturing the same, a smart window including the same, and an automobile and a window for a building using the same.

2. Related Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when the amount of ambient light is sufficient. However, there is a problem in that it is difficult for a driver or the like to properly check the surroundings of the means of transportation at night when the amount of ambient light is insufficient. Alternatively, when the overall transmittance is preset high, there is a problem of causing glare to a driver or the like during day when the amount of ambient light is sufficient. Accordingly, a transmittance variable optical laminate capable of changing the transmittance of light when a voltage is applied has been developed.

The transmittance variable optical laminate is driven to change transmittance by driving liquid crystals in response to application of a voltage. The transmittance variable optical laminates developed to date are manufactured to include a spacer in a liquid crystal layer in order to maintain the cell gap of the liquid crystal layer.

For example, Japanese Patent Application Publication No. 2018-010035 also discloses a transmittance variable optical laminate having applied thereto a liquid crystal layer including a ball spacer in order to maintain a predetermined cell gap. However, if the ball spacer is used to maintain the cell gap of the liquid crystal layer, there are problems in that it is impossible to maintain a uniform cell gap, due to movement of the ball spacer by gravity, making it difficult to maintain a constant in-plane optical color, and a short circuit occurs in the optical laminate.

Therefore, there is a need to develop a transmittance variable optical laminate which, by minimizing the occurrence of short circuits in the laminate while maintaining the cell gap of the liquid crystal uniformly, may maintain a constant in-plane optical color and minimize liquid crystal defects.

[Prior Art Documents]

[Patent Documents]

(Patent Document 1) Japanese Patent Application Publication No. 2018-010035

## SUMMARY

The present disclosure has been made in order to solve the above-described problems, and an object of the present disclosure is to provide a transmittance variable optical laminate which, by including a functional layer having a plurality of pattern portions on a polarizing plate and including ball spacers incorporated into the pattern portions, may minimize the movement of the ball spacers.

Another object of the present disclosure is to provide a transmittance variable optical laminate which, by maintaining the cell gap of the liquid crystal layer uniformly, may maintain a constant in-plane optical color and minimize liquid crystal defects.

Still another object of the present disclosure is to provide a transmittance variable optical laminate which has a simplified manufacturing process by not including a separate substrate for forming a transparent conductive layer.

Yet another object of the present disclosure is to provide a smart window including the above-described transmittance variable optical laminate and an automobile or a window for a building using the same.

However, the objects of the present disclosure are not limited to the objects mentioned above, and other objects not mentioned will be clearly understood by those skilled in the art from the following description.

The present disclosure relates to a transmittance variable optical laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer and including ball spacers, wherein at least one of the first polarizing plate and the second polarizing plate includes a functional layer having a plurality of pattern portions satisfying the following Equation 1, and the ball spacers are incorporated into the pattern portions:

$$[\text{Equation 1}]$$

$$2\ \mu m \leq a \leq 2r$$

wherein a is the distance between the closest peaks in each pattern portion, and r is the radius of the ball spacer.

In a first aspect of the present disclosure, the pattern portion may satisfy the following Equation 2:

$$[\text{Equation 2}]$$

$$1\ \mu m \leq h \leq r$$

wherein h is the height of the pattern portion, and r is the radius of the ball spacer.

In a second aspect of the present disclosure, the pattern portions may satisfy the following Equation 3:

$$[\text{Equation 3}]$$

$$2r \leq L$$

wherein r is the radius of the ball spacer, and L is the distance between the pattern portions.

In the third aspect of the present disclosure, the pattern portion may include a first protrusion and a second protrusion.

In a fourth aspect of the present disclosure, the functional layer may include a cured product of a composition for forming a functional layer.

In a fifth aspect of the present disclosure, the composition for forming a functional layer may include a photocurable composition and a photoinitiator.

In a sixth aspect of the present disclosure, the liquid crystal driving mode of the liquid crystal layer may be any one selected from the group consisting of a twisted nematic (TN) mode, a super-twisted nematic (STN) mode, an in-plane switching (IPS) mode, a fringe-field switching (FFS) mode, an electrically controlled birefringence (ECB) mode, and a vertical alignment (VA) mode.

In a seventh aspect of the present disclosure, at least one of the first transparent conductive layer and the second transparent conductive layer may include a conductive polymer.

In an eighth aspect of the present disclosure, the conductive polymer may include at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphorsulfonic acid, poly(3,4-ethylenedioxythiophene): toluenesulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid.

In a ninth aspect of the present disclosure, at least one of the first transparent conductive layer and the second transparent conductive layer may be formed in direct contact with any one of the first polarizing plate and the second polarizing plate without including a separate substrate therebetween.

In a tenth aspect of the present disclosure, at least one of the first polarizing plate and the second polarizing plate may further include at least one selected from the group consisting of a protective layer, a retardation matching layer, and a refractive index-matching layer.

In an eleventh aspect of the present disclosure, the transmittance variable optical laminate may further include at least one selected from the group consisting of a pressure sensitive adhesive/adhesive layer, a UV-absorbing layer, and a hard coating layer.

The present disclosure also relates to a smart window including the transmittance variable optical laminate.

The present disclosure also relates to an automobile in which the smart window is applied to at least one of a front window, a rear window, a side window, a sunroof window, and an interior partition.

The present disclosure also relates to a window for a building, including the smart window.

According to the transmittance variable optical laminate of the present disclosure, it is possible to minimize the movement of ball spacers by forming a functional layer having a plurality of pattern portions on a polarizing plate and incorporating the ball spacers into the pattern portions.

In addition, according to the transmittance variable optical laminate of the present disclosure, it is possible to maintain a constant in-plane optical color and minimize liquid crystal defects, by maintaining the cell gap of the liquid crystal layer uniformly.

In addition, according to the transmittance variable optical laminate of the present disclosure, it is possible to provide a transmittance variable optical laminate which has a simplified manufacturing process by not including a separate substrate for forming a transparent conductive layer.

## BRIEF DESCRIPTION OF THE DRAWINGS

FIG. 1 shows the structure of a transmittance variable optical laminate according to an embodiment of the present disclosure.

FIGS. 2a to 2e show the laminated structures of polarizing plates according to one or more embodiments of the present disclosure.

FIG. 3 is a top view showing the structure of a functional layer according to one embodiment of the present disclosure.

FIG. 4 is a cross-sectional view showing the structure of pattern portions according to one embodiment of the present disclosure.

FIG. 5 shows the structure of a transmittance variable optical laminate according to another embodiment of the present disclosure.

## DETAILED DESCRIPTION

The present disclosure relates to a transmittance variable optical laminate in which at least one of a first polarizing plate and a second polarizing plate includes a functional layer having a plurality of pattern portions, and more particularly, to a transmittance variable optical laminate in which a plurality of pattern portions provided in the functional layer satisfy the following Equation 1 and ball spacers are incorporated into the pattern portions, thereby minimizing the flow of the ball spacer, thereby maintaining the cell gap of a liquid crystal layer uniformly and maintaining a constant in-plane optical color, thus maintaining the cell gap of the liquid crystal layer by a polymer network provided in the liquid crystal layer.

More specifically, the present disclosure relates to a transmittance variable optical laminate including: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer and including ball spacers, wherein at least one of the first polarizing plate and the second polarizing plate includes a functional layer having a plurality of pattern portions satisfying the following Equation 1, and the ball spacers are incorporated into the pattern portions:

$$[\text{Equation 1}]$$

$$2 \ \mu m \leq a \leq 2r$$

wherein a is the distance between the closest peaks in each pattern portion, and r is the radius of the ball spacer.

The transmittance variable optical laminate of the present disclosure is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of means of transportations such as vehicles, buses, airplanes, ships, or trains, or glass of means of transportation, such as a sunroof.

The transmittance variable optical laminate of the present disclosure may also be used for the smart window in the various technical fields mentioned above, but since the conductive layer is directly formed on the polarizing plate, there is no need to include a separate substrate for forming the conductive layer and the thickness thereof is small and the transmittance variable optical laminate is favorable in terms of flexural properties, and thus the optical laminate of the present disclosure may particularly suitable for use for a smart window for a vehicle or a building. According to one or more embodiments, the smart window to which the transmittance variable optical laminate of the present disclosure is applied may be used for front windows, rear windows, side windows, and sunroof windows of means of transportation such as a vehicle, or windows and doors for a building. Furthermore, the smart window may be used not only for blocking external light, but also for partitioning internal spaces of automobiles or buildings, such as interior partitions, or for privacy protection, and may also be used in wearable devices such as helmets, glasses, or watches.

Hereinafter, embodiments of the present disclosure will be described in more detail with reference to the accompanying drawings. However, the following drawings attached to this specification illustrate preferred embodiments of the present disclosure, and serve to aid in further understanding of the technical idea of the present disclosure together with the contents of the present disclosure described above. Therefore, the present disclosure should not be interpreted as being limited to matters described in the drawings.

Terms used in the present specification are for purpose of describing embodiments and are not intended to limit the present disclosure. In the present specification, singular forms also include plural forms unless the context clearly indicates otherwise. For example, the term "polarizing plate" as used herein may mean at least one polarizing plate among a first polarizing plate and a second polarizing plate, and the term "transparent conductive layer" may mean at least one transparent conductive layer among a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "planar direction" may be interpreted as a direction orthogonal to the polarizing plate and/or the transparent conductive layer, that is, the direction of the user's view.

### <Transmittance Variable Optical Laminate>

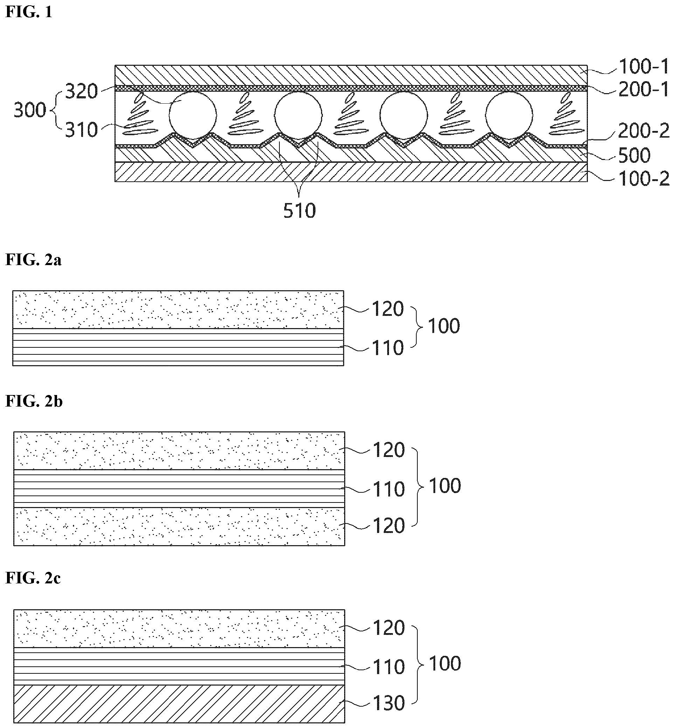

FIG. 1 shows the structure of a transmittance variable optical laminate according to one embodiment of the present disclosure, and FIGS. 2a to 2f show the laminated structures of polarizing plates according to one or more embodiments of the present disclosure.

Referring to FIG. 1, a transmittance variable optical laminate according to one embodiment of the present disclosure may include a first polarizing plate 100-1, a second polarizing plate 100-2, a first transparent conductive layer 200-1, a second transparent conductive layer 200-2, a transparent substrate 150, and a liquid crystal layer 300.

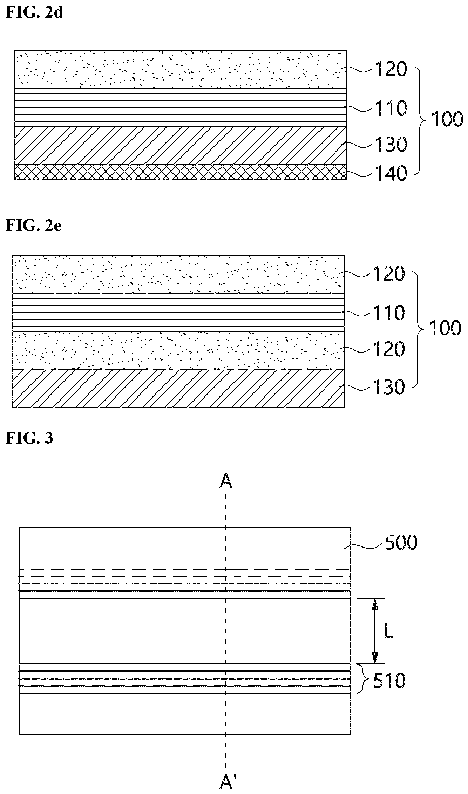

Referring to FIG. 2, the polarizing plate 100 includes a polarizer 110, and may further include at least one selected from the group consisting of a protective layer 120, a retardation matching layer 130, and a refractive index-matching layer 140, on one or both surfaces of the polarizer 110. For example, the polarizing plate 100 may include a polarizer 110 and a protective layer 120 laminated on one or both surfaces of the polarizer 110 (see FIGS. 2a and 2b), or may include a polarizer 110, a protective layer 120 laminated on one surface of the polarizer 110, and a retardation matching layer 130 laminated on the other surface opposite to the one surface of the polarizer 110 (see FIG. 2c), or may include a polarizer 110, a protective layer 120 laminated on one surface of the polarizer, and a retardation matching layer 130 and a refractive index-matching layer 140 sequentially laminated on the other surface opposite to the one surface of the polarizer 110 (see FIG. 2d), or may include a polarizer 110, a protective layer 120 laminated on one surface of the polarizer, and a protective layer 120 and a retardation matching layer1230 sequentially laminated on the other surface opposite to the one surface of the polarizer 110 (see FIG. 2e).

The polarizer 110 may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal alignment.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

In addition, the liquid crystal coating composition may further include a leveling agent, a polymerization initiator, and the like, within a range that does not impair the polarization characteristics of the coating film.

The protective layer 120 serves to protect the polarization characteristics of the polarizer 110 from post-processing and external environments, and may be provided in the form of a protective film, etc.

The protective layer 120 may be formed on and in direct contact with one or both surfaces of the polarizer 110, as shown in FIGS. 2a and 2b, without being limited thereto. For example, the protective layer may have a multi-layer structure in which one or more protective layers are continuously laminated, and may be formed in direct contact with other functional layer(s).

In one or more embodiments, the protective layer 120 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 is intended to match the optical properties of the optical laminate, may be in the form of a retardation film or the like, and may be a conventional or later-developed retardation film. For example, quarter-wave plates or half-wave plates may be used to retard the phase of light, and these may be used alone or in combination.

The retardation matching layer 130 may be formed on and in direct contact with one surface of the polarizer 110, as shown in FIGS. 2c and 2d, without being limited thereto. For example, as shown in FIG. 2e, the retardation matching layer 130 may be formed on one surface of the protective layer 120, so that the polarizer 110, the protective layer 120, and the retardation matching layer 130 may be sequentially laminated.

The retardation matching layer 130 may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above-described contents regarding of the reactive liquid crystal compound of the coated polarizer may be equally applied to the reactive liquid crystal compound.

In one or more embodiments, the thickness of the retardation-matching layer 130 may be 10 $\mu$m to 100 $\mu$m in the case of the stretched polymer film, and 0.1 $\mu$m to 5 $\mu$m in the case of the liquid crystal polymer film.

The refractive index-matching layer 140 is provided to compensate for the refractive index difference of the optical laminate caused by the transparent conductive layer 200 described below, and may serve to improve the viewing characteristics, etc. by reducing the refractive index difference. Furthermore, the refractive index-matching layer 140 may be provided to correct the color caused by the transparent conductive layer 200. Meanwhile, when the transparent conductive layer has a pattern, the refractive index matching layer 140 may compensate for the difference in transmittance between a pattern region with the pattern formed and a non-pattern region where no pattern is formed.

Specifically, the transparent conductive layer 200 is laminated adjacent to other members having a refractive index different therefrom (for example, the polarizer 110, etc.), and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer 140 is included to compensate for refractive index, thereby reducing the difference in light transmittance of the optical laminate. In particular, when a pattern is formed on the transparent conductive layer, the refractive index-matching layer 140 prevents the pattern region and the non-pattern region from being viewed to be distinguishable from each other.

In one embodiment, the refractive index of the refractive index-matching layer 240 may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 200 and other members such as the polarizer 110.

The refractive index-matching layer 140 is not particularly limited as long as it can prevent the sharp difference in refractive index between the transparent conductive layer 200 and other members such as the polarizer 110, and it may include a compound used for the formation of a conventional or later-developed refractive index matching layers. For example, the refractive index-matching layer may be formed from a composition for forming a refractive index-matching layer including a polymerizable isocyanate compound.

In one embodiment, the polarizing plate 100 may further include other functional layers to assist or enhance the characteristics of the polarizer, in addition to the above-mentioned functional layers and, for example, may further include an overcoat layer or the like in order to further improve the mechanical durability.

In one or more embodiments, the polarizing plate 100 may have a thickness of 30 $\mu$m to 200 $\mu$m, preferably 30 $\mu$m to 170 $\mu$m, more preferably 50 $\mu$m to 150 $\mu$m. In this case, the polarizing plate 100 may maintain its optical characteristics while an optical laminate having a small thickness may be manufactured.

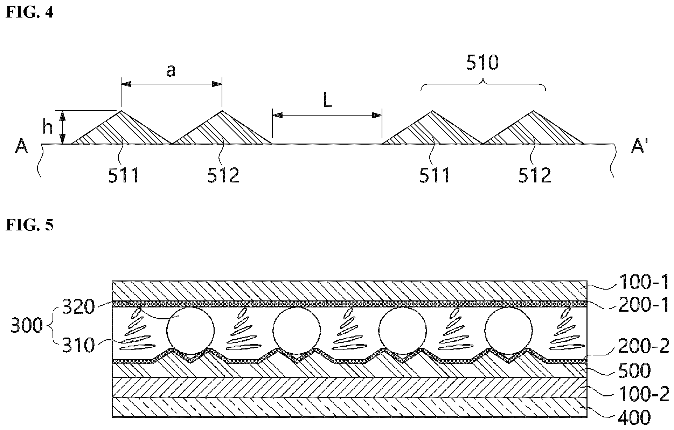

FIG. 3 is a top view showing the structure of a functional layer according to one embodiment of the present disclosure, and FIG. 4 is a cross-sectional view showing the structure of pattern portions according to one embodiment of the present disclosure. For example, FIG. 4 is a cross-sectional view taken in the thickness direction along the line A-A' shown in FIG. 3.

Referring to FIG. 3, a functional layer 500 according to one embodiment of the present disclosure has a plurality of pattern portions 510.

The functional layer 500 is a layer formed on the polarizing plate 100 in order to improve the physical or optical properties of the laminate, and may be, for example, a high-hardness hard coating layer, an anti-fingerprint layer with anti-fingerprint properties, a low-reflective layer, or an anti-glare layer, without being limited thereto.

In one embodiment, the functional layer 500 may be formed by applying a composition for forming a functional layer onto the polarizing plate 100 and then curing the same by light or heat. For example, the functional layer 500 having the pattern portions 510 may be formed by applying a composition for forming a functional layer onto the polarizing plate 100, and forming a pattern portion shape on the functional layer 500 using a patterning roll having a predetermined pattern shape, followed by photocuring using a UV irradiator.

The composition for forming a functional layer is not particularly limited, and may include, for example, a photocurable compound and a photoinitiator.

As the photocurable compound and the photoinitiator, those commonly used in the art may be used without limitation. For example, the photocurable compound may be a photopolymerizable monomer, a photopolymerizable oligomer, or the like, and examples thereof include monofunctional and/or polyfunctional (meth)acrylates. Examples of the photoinitiator include hydroxycyclohexyl phenyl ketone, trimethylbenzoyl diphenylphosphine oxide, acetophenone, oxime ester, etc., and commercially available photoinitiator products include Irgacure-184, TPO, Irgacure-907, etc.

For coating with the composition for forming a functional layer, any method commonly used in the art may be used without limitation. For example, the coating may be performed using gravure coating, roll coating, knife coating, etc. The coating thickness of the photocurable resin composition is 1 to 50 $\mu$m, preferably 2 to 30 $\mu$m, more preferably 2 to 10 $\mu$m.

In one embodiment, after coating with the composition for forming a functional layer, the composition for forming a functional layer may be cured by irradiation with UV light. In this case, the irradiation dose of UV light is about 0.1 to 2 J/cm$^2$, preferably 0.2 to 0.5 J/cm$^2$, and the composition is preferably irradiated with UV light using a highpressure mercury lamp or a metal halide lamp having a main wavelength of 365 nm.

Referring to FIG. 4, the pattern portion 510 provided on the functional layer 500 according to one embodiment of the present disclosure may include a first protrusion 511 and a second protrusion 512.

This embodiment illustrates an example in which the pattern portions 510 are alternately formed to be spaced apart from each other at a predetermined distance and two protrusions 511 and 512 of each pattern portion 510 have a triangular cross-section. That is, the dotted line shown in the center of the pattern portion 510 in FIG. 3 represents a valley between the first protrusion 511 and the second protrusion 512, and both solid lines adjacent to the dotted line represent the peaks of the first protrusion 511 and the second protrusion 512, respectively. In the present disclosure, the expression "peak of the pattern portion" and the expression "peak of the protrusion" may have the same meaning, and the term "peak" may refer to the outermost protruding point in the cross-sectional shape of the pattern portion or the protrusion. As an example, referring to FIG. 4, the peak may be the end point of the triangle of the protrusion 511 or 512 having a triangular cross-sectional shape, and may be the end point of the height (h) of the pattern portion.

However, the present disclosure is not limited thereto, and the pattern portions 510 may have various shapes and distances. For example, the surfaces of the first protrusion 511 and the second protrusion 512, which come into contact with the ball spacer 320, may be formed to have a curved shape corresponding to the outer circumferential surface of the ball spacer 320.

In one embodiment, the pattern portions 510 may be provided alternately throughout one surface of the functional layer 500 and may be provided to be spaced apart from each other at a predetermined distance. In addition, the pattern portions 510 may be formed in a mechanical direction (MD) and/or in a transverse direction (TD) perpendicular to the mechanical direction, and are preferably formed in the mechanical direction (MD) in terms of the processability of forming the pattern portions.

In a conventional art, a method has been attempted to prevent the movement of ball spacers either by forming an alignment film after dispersing ball spacers or by dispersing ball spacers in a composition for forming an alignment film and then forming an alignment film, thereby forming fine curves beneath the dispersed ball spacers. However, in the above conventional method, since the ball spacers are dispersed before forming micro-curves on the alignment film, there are limitations in spacing the ball spacers apart at a certain distance.

However, the transmittance variable optical laminate of the present disclosure has a structure including the functional layer 500 having the plurality of pattern portions 510 on the polarizing plate 100, and in the process of manufacturing the transmittance variable optical laminate, the pattern portions 510 into which the ball spacers are to be incorporated are first formed and then the ball spacers 320 are dispersed. Therefore, the ball spacers 320 are dispersed intensively in the portions where the pattern portions 510 have been formed, whereby the ball spacers 320 may be evenly distributed at regular intervals without clumping together, thereby maintaining the cell gap of the liquid crystal layer uniformly, thus maintaining a constant in-plane optical color and minimizing liquid crystal defects.

The pattern portions 510 may satisfy the following Equation 1:

[Equation 1]

$$2 \ \mu m \le a \le 2r$$

wherein a is the distance between the closest peaks in each pattern portion, and r is the radius of the ball spacer.

As shown in FIG. 4, "a" in Equation 1 above represents the distance between the highest parts (i.e., peaks) of the first protrusion 511 and the second protrusion 512. "a" is preferably 2 $\mu$m or more so that the ball spacer 320 for maintaining the cell gap of the liquid crystal layer 300 may be incorporated between the first protrusion 511 and the second protrusion 512 of the pattern portion. In addition, if "a" is larger than the diameter (i.e., 2r) of the ball spacer 320, the ball spacer 320 may not be in close contact with any one of the first protrusion 511 and the second protrusion 512 of the pattern portion 510, making it difficult to prevent movement of the ball spacer. Thus, "a" is preferably 2r or less.

In one embodiment, the pattern portion 510 may satisfy the following Equation 2:

[Equation 2]

$$1 \ \mu m \le h \le r$$

wherein h is the height of the pattern portion, and r is the radius of the ball spacer.

As shown in FIG. 4, "h" in Equation 2 above represents the distance from the surface of the functional layer 500 to the highest part (i.e., peak) of the first protrusion 511 and the second protrusion 512. "h" is preferably 1 $\mu$m or more so that the ball spacer 320 may be incorporated between the first protrusion portion 511 and the second protrusion 512 of the pattern portion, thus minimizing movement of the ball spacer. In addition, if "h" is larger than the radius (i.e., r) of the ball spacer 320, the occupied proportion of the pattern portion 510 in the liquid crystal layer 300 may be high, which may affect the helical alignment of the liquid crystal compound, making it difficult to exhibit a constant in-plane optical color. Thus, "h" is preferably equal to or smaller than "r".

In one embodiment, the pattern portions 510 may be provided to be spaced apart from each other at a predetermined distance on one surface of the functional layer 500, and may preferably satisfy the following Equation 3:

[Equation 3]

$$2r \le L$$

wherein r is the radius of the ball spacer, and L is the distance between the pattern portions.

As shown in FIGS. 3 and 4, "L" in Equation 3 above represents the distance between the pattern portions 510. The distance L between the pattern portions 510 is preferably equal to or greater than the diameter (i.e., 2r) of the ball spacer 320, and in this case, the ball spacers 320 may be prevented from being dispersed in contact with each other, thereby being more advantageous in maintaining the cell gap and maintaining a constant in-plane optical color, and the alignment of the liquid crystal compound may be improved due to the flat surface where the pattern portion 510 is not formed. In addition, "L" may be 5 mm or less in terms of maintaining the minimum distance between the ball spacers 320.

The transparent conductive layer 200 is provided for driving the liquid crystal layer 300 and may be formed in direct contact with the polarizing plate 100. For example, as shown in FIG. 1, the first transparent conductive layer 200-1 and the second transparent conductive layer 200-2 may be formed in direct contact with the first polarizing plate 100-1 and the second polarizing plate 100-2, respectively.

In a conventional art, an optical laminate used to manufacture a smart window, etc. is manufactured by forming a conductive layer for driving liquid crystals on one surface of a substrate and bonding the other surface of the substrate to a polarizing plate. However, the transmittance variable optical laminate according to the present disclosure is characterized in that, since the conductive layer is directly formed on one surface of the polarizing plate without including a separate substrate for forming the conductive layer, the laminate has improved transmittance in a light transmission mode and improved flexural properties while having a reduced thickness.

In one embodiment, the transparent conductive layer 200 may be formed by direct deposition on one surface of the polarizing plate 100. In this case, the transparent conductive layer 200 may be formed in direct contact with a pretreated surface of the polarizing plate 100 after performing pre-treatment such as corona treatment or plasma treatment on one surface of the polarizing plate 100 in order to improve the adhesion thereof to the polarizing plate 100. The pre-treatment is not limited to corona treatment or plasma treatment, and may be any conventional or later-developed pre-treatment process that does not impair the purpose of the present disclosure.

In another embodiment of the present disclosure, the transparent conductive layer 200 may be formed in direct contact with the polarizing plate 100 with a highly adhesive layer (not shown) as a primer interposed therebetween in order to improve the adhesion between the transparent conductive layer 200 and the polarizing plate 100. The highly adhesive layer may include a material described with respect to the pressure sensitive adhesive/adhesive layer among other members to be described later, without being limited thereto.

The transparent conductive layer 200 may be formed on one surface of the polarizing plate 100 by a deposition and coating method commonly used in art. For example, it may be formed by an appropriate process selected from coating processes such as a spin coating process, a roller coating process, a bar coating process, a dip coating process, a gravure coating process, a curtain coating process, a die coating process, a spray coating process, a doctor blade coating process, a kneader coating process, etc.; printing (application) processes such as a screen printing process, a spray printing process, an inkjet printing process, an iron plate printing process, an intaglio printing process, a flat printing process, etc.; and deposition processes such as a chemical vapor deposition (CVD), physical vapor deposition (PVD), and plasma-enhanced chemical vapor deposition (PECVD), etc.

In the transmittance variable optical laminate of the present disclosure, the transparent conductive layer 200 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like. Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy. The carbonaceous material may include at least one selected from the group consisting of carbon nanotubes (CNTs), and graphene. The conductive polymer may be a conventional or later-developed conductive polymer material. For example, the conductive polymer may include at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphorsulfonic acid, poly(3,4-ethylenedioxythiophene): toluenesulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid, and is preferably poly(3,4-ethylenedioxythiophene). The conductive ink may be a mixture of metal powder and a curable polymeric binder, and the nanowires may be, for example, silver nanowires (AgNWs). Furthermore, the first transparent conductive layer 200-1 may be formed to have a structure consisting of two or more layers by combining the above-described materials. For example, in order to reduce the reflectivity of incident light and increase the transmittance, the first transparent conductive layer 200-1 may be formed to have a two-layer structure including a metal layer and a transparent conductive oxide layer.

In the transmittance variable optical laminate of the present disclosure, at least one transparent conductive layer 200 among the first transparent conductive layer 200-1 and the second transparent conductive layer 200-2 includes the conductive polymer, and preferably has a visible light transmittance of 50% or more. In this case, even if deformation caused by external stress is applied to the transparent conductive layer, cracks may be prevented from occurring in the transparent conductive layer, and further, sheet resistance may be prevented from increasing excessively.

In one embodiment, when the transparent conductive layer 200 includes a conductive polymer, the surface thereof in contact with the liquid crystal layer 300 may be oriented by rubbing. Unlike a transparent conductive layer including a metal component, the conductive polymer included in the transparent conductive layer 200 of the present disclosure allows a certain groove to be formed on the surface, and thus the liquid crystal compound in the liquid crystal layer may be aligned in a desired position and direction. In this case, the transparent conductive layer 200 may act as both an electrode for driving the liquid crystal layer and an alignment film, and since it does not include a separate alignment film, it is possible to manufacture an optical laminate having a smaller thickness and simplify the manufacturing process.

The liquid crystal layer 300 may change the driving mode of the optical laminate by adjusting the transmittance of light incident in one or more directions in response to an electric field.

The liquid crystal layer 300 may include a liquid crystal compound 310 and may be positioned, for example, within spaces provided by a sealant layer (not shown) and the ball spacers 320 provided between the first polarizing plate 100-1 and the second polarizing plate 100-2 in the light control region.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal compound may include a chiral nematic (cholesteric) liquid crystal compound, wherein the chiral nematic liquid crystal compound may include a nematic liquid crystal compound and a chiral compound.

In the nematic liquid crystal compound, long-rod-shaped molecules are arranged parallel to each other, and there is no regularity in the center position of the molecules, but the molecules are ordered in the axial direction. Each molecule of the nematic liquid crystal compound may move freely in the long-axial direction, and thus the viscosity is low and the fluidity is good. Since the orientation of each molecule is almost equal up and down, the polarization cancels out and the liquid crystal compound generally does not exhibit ferroelectricity. The type of nematic liquid crystal compound is not particularly limited, and any compound that contains a mesogenic group may be used without limitation.

Chiral compounds are compounds whose three-dimensional structures are symmetrical to each other like the relationship between the left and right hands, and although they have the same chemical structure and physical properties, they have different three-dimensional structures because they are mirror images of each other. When a certain amount of a chiral compound is contained in the nematic liquid crystal compound, it induces a helical pitch. As the type of chiral compound, any chiral compound may be used without particular limitation as long as it can induce a desired helical pitch without damaging the liquid crystal properties of the liquid crystal compound, for example, nematic regularity.

The chiral compound for inducing a helical pitch in the liquid crystal compound needs to contain at least chirality in its molecular structure. Examples of the chiral compound include a compound having one or more asymmetric carbons, a compound having an asymmetric point on a heteroatom, such as a chiral amine or chiral sulfoxide, or a compound having an axially asymmetric, optically active site, such as cumulene or binaphthol.

The chiral compound may be, for example, a low-molecular-weight compound having a molecular weight of 1,500 or less. For example, as the chiral compound, a commercially available chiral nematic liquid crystal, for example, a chiral dopant liquid crystal S-811 commercially available from Merck or Paliocolor LC 756 (manufactured by BASF) may be used, without being limited thereto.

The chiral nematic liquid crystal compound may contain, based on the total weight of the chiral nematic liquid crystal compound, 75 to 99 wt% of the nematic liquid crystal compound and 1 to 25 wt% of the chiral compound, without being limited thereto. The helical pitch of the chiral nematic liquid crystal compound may be controlled by appropriately adjusting the content of the nematic liquid crystal compound and the chiral compound within the above ranges. The pitch of the chiral nematic liquid crystal compound is not particularly limited, but may be 5 to 20 $\mu$m.

The liquid crystal driving mode of the liquid crystal layer 300 is not particularly limited, and examples thereof include twisted nematic (TN) mode, super-twisted nematic (STN) mode, in-plane switching (IPS) mode, fringe-field switching (FFS) mode, electrically controlled birefringence (ECB) mode, and vertical alignment (VA) mode. Twisted nematic (TN) mode is preferably used in terms of light transmittance control.

The sealant may include a curable resin as a base resin. As the base resin, a UV-curable resin or thermosetting resin known in the art that may be used for a sealant may be used. The UV-curable resin may be a polymer of a UV-curable monomer. The thermosetting resin may be a polymer of a thermosetting monomer.

As the base resin of the sealant, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant may be formed by a method commonly used in the art, and for example, may be formed by drawing a sealant into the outer peripheral region (i.e., inactive region) of the liquid crystal layer using a dispenser having a nozzle.

The ball spacer 320 may have a diameter of 1 to 10 $\mu$m, preferably 3 to 7 $\mu$m. In addition, when viewed in a planar direction, the area occupied by the ball spacer in the liquid crystal layer 300 is preferably 0.01 to 10% of the area of the liquid crystal layer 300 in terms of user's visibility and improved transmittance in the light transmission mode.

In one embodiment, the liquid crystal layer 300 may further include an alignment film as needed, and the alignment film may be formed on both surfaces of the liquid crystal layer 300 including a liquid crystal compound, for example.

The alignment film is not particularly limited as long as it is intended to align the liquid crystal compound.

The alignment film may be formed by applying and curing an alignment film coating composition containing an alignable polymer, a photopolymerization initiator, and a solvent. The alignable polymer is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used. The alignable polymer is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used.

FIG. 5 shows the structure of a transmittance variable optical laminate according to another embodiment of the present disclosure.

The transmittance variable optical laminate of the present disclosure may further include other members within a range that does not impair the purpose of the present disclosure. For example, the transmittance variable optical laminate may further include a pressure sensitive adhesive/adhesive layer 400, and may further include a UV-absorbing layer, etc.

The pressure sensitive adhesive/adhesive layer 400 may be formed using an adhesive or a pressure sensitive adhesive layer, and preferably has an appropriate adhesive /pressure-sensitive adhesive force so that peeling, bubbles, etc. do not occur during handling of the optical laminate, as well as transparency and thermal stability.

The adhesive may be a conventional or later-developed adhesive, and for example, a photocurable adhesive may be used.

The photocurable adhesive exhibits a strong adhesive force by being crosslinked and cured with active energy rays such as ultraviolet (UV) rays and electron beam (EB), and may be composed of a reactive oligomer, a reactive monomer, a photopolymerization initiator, etc.

The reactive oligomer is an important component that determines the properties of the adhesive, and forms a cured coating film by forming a polymer bond through a photopolymerization reaction. Usable reactive oligomers include polyester-based resins, polyether-based resins, polyurethane-based resins, epoxy-based resins, polyacrylic resins, and silicone-based resins.

The reactive monomer acts as a crosslinking agent and a diluent for the above-described reactive oligomer and affects the adhesive properties. Usable reactive monomers include monofunctional monomers, polyfunctional monomers, epoxy-based monomers, vinyl ethers, and cyclic ethers.

The photopolymerization initiator acts to initiate photopolymerization by absorbing light energy to generate radicals or cations. An appropriate photopolymerization initiator selected depending on the photopolymerization resin may be used.

The pressure-sensitive adhesive may be a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the adhesive may preferably be an acrylic pressure-sensitive adhesive from the viewpoint of ease availability, etc., and may include, for example, a (meth)acrylate copolymer, a crosslinking agent, a solvent, etc.

The crosslinking agent may be a conventional or later-developed crosslinking agent, and may include, for example, a polyisocyanate compound, an epoxy resin, a melamine resin, a urea resin, a dialdehyde, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cellosolve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

The thickness of the pressure sensitive adhesive/adhesive layer 400 may be appropriately determined depending on the type of resin acting as a pressure sensitive adhesive/adhesive, the pressure sensitive adhesive/adhesive strength, the environment in which the pressure-sensitive adhesive is used, etc. In one embodiment, the pressure sensitive adhesive/adhesive layer may have a thickness of 0.01 to 50 $\mu$m, preferably 0.05 to 20 $\mu$m, more preferably 0.1 to 10 $\mu$m, in order to ensure sufficient pressure sensitive adhesive/adhesive strength and minimize the thickness of the optical laminate.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylene-bis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl) phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the transmittance variable layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The present disclosure also includes a method for manufacturing the above-described transmission variable optical laminate. The method for manufacturing the transmittance variable optical laminate is not particularly limited, and the transmittance variable optical laminate may be manufactured using any bonding technique or the photolithography technique described above.

**<Smart Window, Automobile and Window for Building>**

The present disclosure includes, in addition to the above-described transmittance variable optical laminate, a smart window including the same. In addition, the present disclosure includes an automobile in which the smart window is applied to at least one of a front window, a rear window, a side window, a sunroof window, and an interior partition, and a window for a building including the smart window.

**Claims**

**1.** A transmittance variable optical laminate comprising:

a first polarizing plate;

a first transparent conductive layer formed on one surface of the first polarizing plate;

a second polarizing plate opposite to the first polarizing plate;

a second transparent conductive layer formed on one surface of the second polarizing plate and opposite to the first transparent conductive layer; and

a liquid crystal layer provided between the first transparent conductive layer and the second transparent conductive layer and comprising ball spacers,

wherein at least one of the first polarizing plate and the second polarizing plate comprises a functional layer having a plurality of pattern portions satisfying the following Equation 1:

$$2 \ \mu m \leq a \leq 2r,$$

and the ball spacers are incorporated into the pattern portions, wherein a is a distance between the closest peaks in each pattern portion, and r is a radius of the ball spacer.

2. The transmittance variable optical laminate of claim 1, wherein the pattern portion satisfies the following Equation 2:

$$1 \ \mu m \leq h \leq r,$$

wherein h is a height of the pattern portion, and r is a radius of the ball spacer.

3. The transmittance variable optical laminate of claim 1, 2 or 3, wherein the pattern portions satisfy the following Equation 3:

$$2r \leq L,$$

wherein r is a radius of the ball spacer, and L is a distance between the pattern portions.

4. The transmittance variable optical laminate of one of claims 1 to 3, wherein the pattern portion comprises a first protrusion and a second protrusion.

5. The transmittance variable optical laminate of one of claims 1 to 4, wherein the functional layer comprises a cured product of a composition for forming the functional layer.

6. The transmittance variable optical laminate of claim 5, wherein the composition for forming the functional layer comprises a photocurable composition and a photoinitiator.

7. The transmittance variable optical laminate of one of claims 1 to 6, wherein a liquid crystal driving mode of the liquid crystal layer is any one selected from the group consisting of a twisted nematic (TN) mode, a super-twisted nematic (STN) mode, an in-plane switching (IPS) mode, a fringe-field switching (FFS) mode, an electrically controlled birefringence (ECB) mode, and a vertical alignment (VA) mode.

8. The transmittance variable optical laminate of one of claims 1 to 7, wherein at least one of the first transparent conductive layer and the second transparent conductive layer comprises a conductive polymer.

9. The transmittance variable optical laminate of claim 8, wherein the conductive polymer comprises at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphorsulfonic acid, poly(3,4-ethylenedioxythiophene): toluenesulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid.

10. The transmittance variable optical laminate of one of claims 1 to 9, wherein at least one of the first transparent conductive layer and the second transparent conductive layer is formed in direct contact with any one of the first polarizing plate and the second polarizing plate without comprising a separate substrate therebetween.

11. The transmittance variable optical laminate of one of claims 1 to 10, wherein at least one of the first polarizing plate and the second polarizing plate further comprises at least one selected from the group consisting of a protective layer, a retardation matching layer, and a refractive index-matching layer.

12. The transmittance variable optical laminate of one of claims 1 to 11, further comprising at least one selected from the group consisting of a pressure sensitive adhesive/adhesive layer, a UV-absorbing layer, and a hard coating layer.

**13.** A smart window comprising the transmittance variable optical laminate of any one of claims 1 to 12.

**14.** An automobile in which the smart window of claim 13 is applied to at least one of a front window, a rear window, a side window, a sunroof window, and an interior partition.

**15.** A window for a building, comprising the smart window of claim 13.

**FIG. 1**

**FIG. 2a**

**FIG. 2b**

**FIG. 2c**

**FIG. 2d**

120
110
130
140
100

**FIG. 2e**

120
110
120
130
100

**FIG. 3**

A

500

L

510

A'

**FIG. 4**

**FIG. 5**

| | Europäisches Patentamt European Patent Office Office européen des brevets | **EUROPEAN SEARCH REPORT** | **Application Number** EP 25 15 0953 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2023 0126292 A (DONGWOO FINE CHEM CO LTD [KR]) 30 August 2023 (2023-08-30)<br>* figures 1-8 *<br>* paragraph [0065] - paragraph [0294] *<br>- - - - - | 1-15 | INV.<br>G02F1/1339 |
| Y | US 2020/124923 A1 (KIM JUNG WOON [KR] ET AL) 23 April 2020 (2020-04-23)<br>* figures 1,2 *<br>* paragraph [0004] *<br>* paragraph [0121] - paragraph [0122] *<br>* paragraph [0025] *<br>- - - - - | 1-15 | |

TECHNICAL FIELDS SEARCHED (IPC)

G02F

The present search report has been drawn up for all claims

| Place of search | Date of completion of the search | Examiner |
|---|---|---|
| Munich | 26 May 2025 | Kentischer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 0953

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | Publication date | Patent family member(s) | | Publication date |
|---|---|---|---|---|
| KR 20230126292 A | 30-08-2023 | CN | 118679420 A | 20-09-2024 |
| | | EP | 4485056 A1 | 01-01-2025 |
| | | JP | 2025507629 A | 21-03-2025 |
| | | KR | 20230126292 A | 30-08-2023 |
| | | WO | 2023163362 A1 | 31-08-2023 |
| US 2020124923 A1 | 23-04-2020 | CN | 108780250 A | 09-11-2018 |
| | | EP | 3404474 A1 | 21-11-2018 |
| | | JP | 6641587 B2 | 05-02-2020 |
| | | JP | 2019505848 A | 28-02-2019 |
| | | KR | 20180012714 A | 06-02-2018 |
| | | TW | 201804230 A | 01-02-2018 |
| | | US | 2020124923 A1 | 23-04-2020 |
| | | WO | 2018021837 A1 | 01-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A